# EUROPEAN PATENT APPLICATION

(11) **EP 2 216 196 A2**
(43) Date of publication of application: **11.08.2010**
(21) Application number: 10159605.4
(22) Date of filing: 01.08.2007
(51) Int. Cl.: B60K 20/00, F16H 59/02, F16H 63/18

(54) **Gear shift arrangement for a vehicle**

(62) Divisional of application: 07794101.1
(71) Applicant: Husqvarna AB, 561 82 Huskvarna (SE)
(72) Inventor: Pentilla, Heikki, 566 91, Habo (SE); Friedrichs, Thomas, 576 91, Sävsjö (SE)

(57) **Abstract**

Gear shift arrangement for a shiftable manual gearbox (300) provided in a vehicle, e.g. an off road vehicle, scooter or snowmobile, comprising a shift operating mechanism (9, 8) to be operated by a driver, said gearbox having a first set of gears with positions for high speed, and at least one further gear from the group of gears low speed, neutral and parking, and a second set of gears with positions for at least forward and reverse. The positions of the first set of gears are shiftable under influence of a first shift lever (9), that the positions of the second set of gears are shiftable under influence of a second shift lever (8) separate from the first one, and each shift lever is movable in essentially only one plane.

## Description

### Technical field

The invention relates to a gear shift arrangement for a manual shiftable gearbox provided in a vehicle, e.g. an off road vehicle, scooter or snowmobile, comprising a shift operating mechanism to be operated by a driver, said gearbox having a first set of gears with positions for high speed, and at least one further gear from the group of gears low speed, neutral and parking, and a second set of gears with positions for at least forward and reverse.

The invention also relates to a gear shift arrangement in which the shifting of the driver is transferred into turning of at least one shift control shaft that has a number of rotationally fixed shift sleeves each sleeve comprising at least a part of a shift groove that affects a control pin of a shift fork to make the shift fork move and axially move a shift ring that is rotationally fixed on a shaft of the gearbox and thereby make teeth of the shift ring engage/disengage with/from teeth of a gear wheel thereby engaging/disengaging a gear of the vehicle,

### Background of the invention

All terrain vehicles (ATV's) are vehicles that often travel on low pressure tires, and often with a seat that is straddled by the operator, and with handlebars for steering control. ATV's have become popular both as utility vechicles and as recreactional vehciles. Typically ATV's are equipped with four wheels and with two or four wheel drive. However there are also ATV's with a side by side configuration of the driver and passenger and conceivably also three wheelers. Further there are similar vehicles for street use or street and terrain use. There are also motorcycles, scooters and even snowmobiles that require or use a similar drive arrangement as an ATV or similar vehicle.

The drive train for the ATV, i.e. its internal combustion engine and corresponding drive line; transmitting a turning movement from the internal combustion engine to at least one of the wheels, is usually arranged within the frame. Like a two-wheeled motorcycle, the frame needs to be relatively narrow (in width), since it is intended to be straddled by the rider and further since the ATV is designed for off-road conditions, it is desirable to have a high ground clearance. In order to enable a frame that is narrow it is desirable to have a drive train that is also narrow in width.

Further, in some drive trains, continuously variable transmission (CVT) is used to transfer power from the engine to the wheels often via a gearbox. Such transmissions can employ a drive belt that is wrapped around a pair of variable diameter pulleys. During operation, such transmissions generate a great deal of heat. Due to the nature of the CVT, heat can decrease performance and life of the CVT belt. Sufficient cooling of the CVT is therefore desirable. In a scooter or snowmobile a CVT is often the only transmission, and sometimes it is supplemented by a reduction gearbox giving an increased reduction ratio. While in an ATV the CVT is usually supplemented by a shiftable gearbox having a number of different gears. Thereby the total changeable ratio of the complete transmission, i.e. CVT plus shiftable gearbox is usually increased. This is a clear advantage especially for terrain driving.

Many ATVs have a fairly complicated shift pattern for the shift lever of their shiftable manual gearbox. Even if there is a CVT present in the driveline there is a need for several gears, e.g. low forward, high forward, neutral, reverse and often parking, sometimes also high reverse. This creates 4 - 6 shift lever positions usually in an H pattern or similar. Sometimes there is a second shift lever with positions for high and low. In this case there is still usually 4 or more shift lever positions in an H pattern. Considering the bumpy ride of an off road vehicle in the terrain it can be fairly difficult to move the shift lever in an H pattern gear change system. If you get stuck in the terrain a usual first try to get out is to rock the vehicle by changing quickly from forward to reverse to forward etc. It is hard to move the shift lever from one corner of the H pattern over to another corner. This loss of speed often makes the rocking less effective. ATVs, motorcycles and scooters usually have unsyncronised gearboxes, so when changing gear the driver must keep pushing the gear lever until the teeth of the shift ring engage with the teeth of the gear wheel of the chosen gear. This can be annoying especially in bumpy terrain.

### Objects of the invention

An object of the invention is to provide a gear shift arrangement which enables an easier and preferably quicker shift of gear.

### Summary of the invention

At least one of the above mentioned objects and/or problems are met by providing a gear shift arrangement in accordance with the invention having the characteristics appearing from the appended claims. The gear shift arrangement according to the invention is thus essentially **characterised in that** the first set of gears are shiftable under influence of a first shift lever, that the positions of the second set of gears are shiftable under influence of a second shift lever (8) separate from the first one, and each shift lever is movable in essentially only one plane. Accordingly there are two separate shift levers and each lever is movable in only one plane, i.e. the shift lever will be moved in only one direction during a shift. With a conventional H pattern the lever will often have to be moved in three different directions, e.g. when rocking the vehicle. In a preffered embodiment each shift lever is movable in only a longitudinal plane of the vehicle. Further the two gear levers are arranged in a side by side arrangement on the vehicle close two each handgrip, so one is intended to be operated with the left hand, normally the second lever, and the other with the right hand, normally the first lever.

### Brief description of the drawings

The invention will be described in the following in closer detail by means of various embodiments thereof with reference to the accompanying drawings wherein identical numeral references have been used in the various drawing figures to denote corresponding components.
FIG. 1 is a rear perspective view illustrating a straddle type ATV with a gear shift arrangement according to the invention.
FIG. 2 is a cross section of a drive train for the ATV of FIG. 1, the cross section taken along a forward and a rear output drive shaft of the ATV.
FIG. 3 is a top plan view of the drive train of the ATV of FIG. 1.
FIG. 4 is a top schematic view showing a main shaft and a middle shaft of a shiftable manual gearbox according to the invention.
FIG. 5 is a top perspective view showing the components of fig. 4.
FIG. 6 is a top schematic view showing the middle shaft and a rear shaft of the gearbox of fig.4.
FIG. 7 is a top perspective view showing the components of fig. 6.

### Description of preferred embodiments

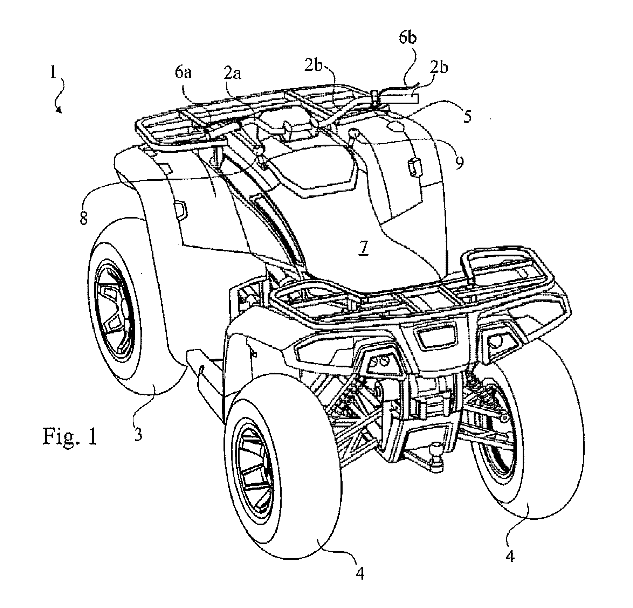

Figure 1 shows a perspective view of an All Terrain Vehicle 1 (ATV). The ATV 1 has four wheels, front wheels 3 and rear wheels 4, a seat 7 to be straddled by an operator, and handlebars 2a, 2b for steering control. Further there are two gear shift levers 8,9, a first lever 9 and a second lever 8 located in a side by side configuration, i.e. left and right, preferably with a distance of several times the height of each lever.

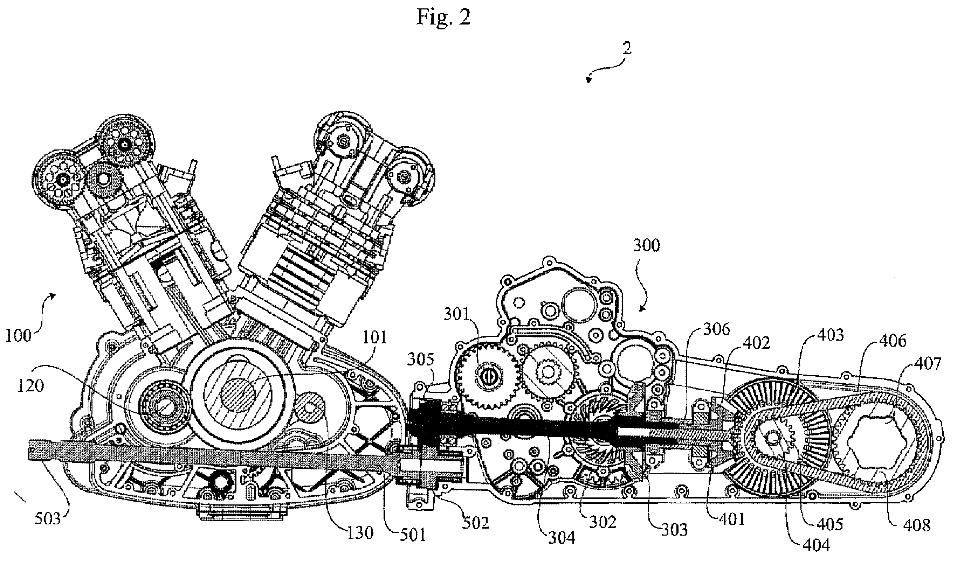

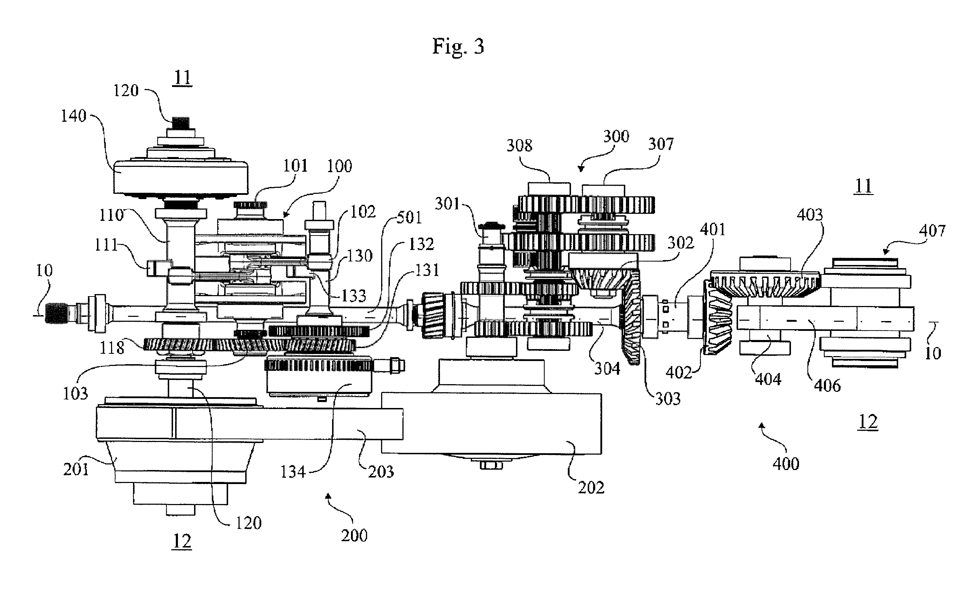

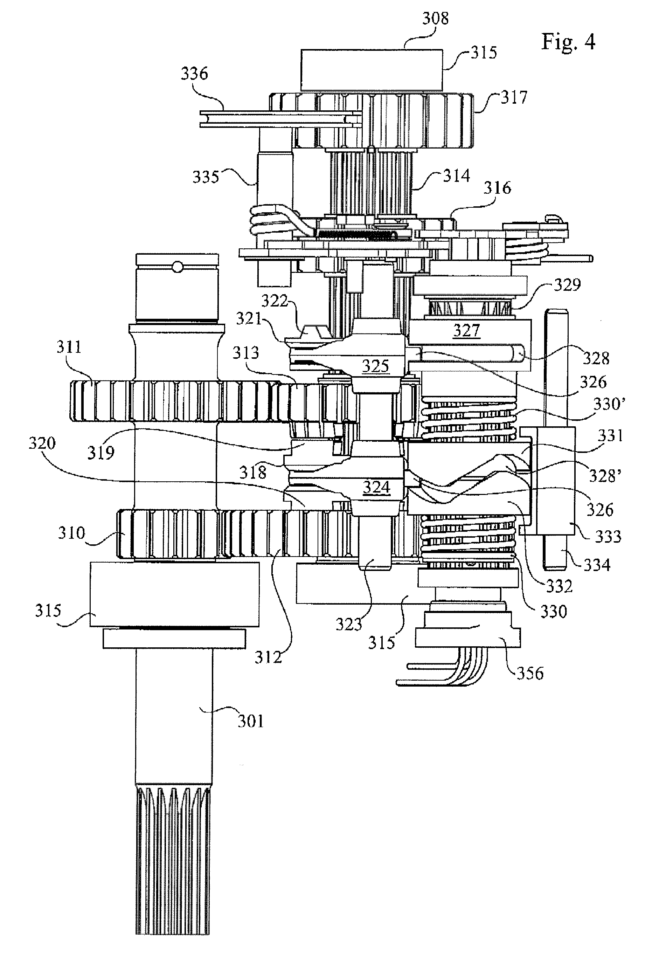

The power train 2 of the ATV will now be described with reference to FIG. 2 and 3. The centre line of the powertrain is indicated by the longitudinal axis 10 providing a first lateral side 1, i.e. the right side of the power train, a second lateral side 12, i.e. the left side of the power train. The power train 2 with longitudinal axis 10 runs in a roughly longitudinal direction of the vehicle. In general, an internal combustion engine 100 (in FIG. 3 and 4 only the connecting rods 102 of the engine 100 are shown) has an engine drive shaft 120 driving a drive pulley 201 of a continuously variable transmission 200 ("CVT"). The CVT 200 also comprises driven pulley 202 driving a main shaft 301 of a gearbox 300, with at least a forward gear and a neutral gear. The main shaft 301 is substantially parallel to the engine drive shaft 120 and both shafts extend essentially transverse to the longitudinal axis 10. The gearbox 300 is located in a first longitudinal direction, normally rear of the engine 100, and has a gearbox output shaft 304 extending through the gearbox 300 in a direction parallel to the longitudinal axis 10. The output shaft 304 has a front end 305 for transmitting a turning movement to a longitudinal front shaft 501 for driving the front wheels 3 and a rear end 306 for transmitting a turning movement to a longitudinal rear shaft 401 for driving the rear wheels 4.

The crankshaft 101 has a first end at the first lateral side 11 and a second end at the second lateral side 12. The crankshaft 101 comprises a crankshaft gear wheel 103 at its second end, for driving both a first balance shaft 110 and a second balance shaft 130. Preferably the crankshaft gear wheel 103 is a helical gear wheel for a smooth and quiet operation; however it may for example also be a spur gear wheel. The crankshaft 101, the first balance shaft 110 and the second balance shaft 130 being arranged in a protected housing 150.

The first balance shaft 110 is journalled in two roller bearings 112 and has a first end at the first lateral side 11 and a second end at the second lateral side 12. At its second end, the first balance shaft 110 comprises a first balance shaft gear wheel 118 adapted to cooperate with the crankshaft gear wheel 103. At its first end, the first balance shaft 110 comprises a centrifugal clutch 140, which clutch 113 connects the first balance shaft 110 to the engine drive shaft 120. The first balance shaft 110 is hollow and the engine drive shaft 120 runs through the interior thereof. Further, the first balance shaft 110 is an eccentric weighted shaft, thanks to the balance weight 111 located at a centre portion of the shaft 110, which offsets vibrations in engine.

The centrifugal clutch 140 is of conventional type and will therefore not be described more.

The second balance shaft 130 has a first end at the first lateral side 11 and a second end at the second lateral side 12. At its second end, the second balance shaft 130 comprises from the second end and inwards; a flywheel generator 134, a second balance shaft first gear wheel 131 adapted to cooperate with the crankshaft gear wheel 103, and a second balance shaft second gear wheel 132. The second balance shaft second gear wheel 132 is for connecting to an engine start motor (not shown), preferably via a series of gear wheels (also not shown), for starting the engine. Further, the second balance shaft 130 is an eccentric weighted shaft, thanks to the balance weight 133 located at a centre portion of the shaft 130, which offsets vibrations in engine.

The engine drive shaft 120 runs through the interior of the hollow first balance shaft 110 and it has a first end at the first lateral side 11 and a second end at the second lateral side 12. The centrifuigal clutch 140 connects the engine drive shaft 120 to the first balance shaft 110 at the first end of engine drive shaft 120 and at the opposite end the drive pulley 201 of the continuously variable transmission 200 is secured.

The continuously variable transmission 200 comprises two v-belt pulleys, drive pulley 201 and the driven pulley 202, which are split perpendicular to their axes of rotation, with a v-belt 203 running between them. The gear ratio is changed by moving the two sections of one pulley 201, 202 closer together and the two sections of the other pulley 202, 201 farther apart. Due to the v-shaped cross section of the belt 203, this causes the belt to ride higher on one pulley 201, 202 and lower on the other 202, 201. Doing this changes the effective diameters of the pulleys 201, 202, which changes the overall gear ratio. The distance between the pulleys 201, 202 does not change, and neither does the length of the belt 203.

The driven pulley 203 is secured to the main shaft 301 of the gearbox 300, transmitting a turning movement to the main shaft 301 at a first end thereof. The main shaft 301 being parallell to the crankshaft 101, the balance axis 110, 130 and the engine drive shaft 120, and having its first end at the seond lateral side 12 of the vehicle 1 from where it extends over to the first lateral side 11.

The gearbox 300 is a partly conventional gearbox with at least a forward gear and a neutral gear, but suitable also reverse gear. Preferably at least the forwards gear having a high gear and a low gear. The main shaft 301 is essentially parallel to the engine drive shaft 120 and is located rear of the engine 100. A gearbox rear shaft 307 being parallel to the main shaft 301 is driven by the main shaft 301 via a series of gears driving one at a time two large diameters gear wheels 309, 310 of the gearbox rear shaft 307, where a first large diameters gear wheel 309 corresponds to reverse gear and the second large diameters gear wheel 310 corresponds to forward gear. The gearbox 300 further comprises a gearbox output shaft 304 extending through the gearbox 300, which output shaft 304 is driven by a right-angled first pair of cooperating conical gears 302, 303 of the gearbox 300, the first pair of cooperating conical gears 302, 303 of the kind where the gear shafts 304, 307 meets in the same plane, e.g. a bevel gear but not a hypoid gear. The first pair of cooperating conical gears 302, 303 includes a gearbox first conical gear wheel 302 mounted on the gearbox rear shaft 307 and a gearbox second conical gear wheel 303 mounted on the gearbox output shaft 304. The first pair of cooperating conical gears 302, 303 has a gear ratio of 1:x where x > 1, why the second conical gear wheel 303 has the largest diameter of the two 302, 303. The gearbox output shaft 304 is used for driving both the rear drive line 400 and the front drive line of the vehicle.

The front drive line is shown only by a longitudinal front shaft 501 which is connected to the output shaft 304 at a front end of the gearbox 300 via a gear wheel connection 305, 502. The longitudinal front shaft 501 extends below the crankshaft 101 and the balance axis 110, 130, and has a front connection 503 for joining a further front shaft (not shown) for connecting to the front wheel differential (not shown) in order to drive the front wheels 3 (see FIG.1).

The rear drive line 400 comprises a longitudinal rear shaft 401 joined, at the rear of the gearbox 300, to the rear end 306 of the output shaft 304. The opposite end of the longitudinal rear shaft 401 comprises a third conical gear wheel 402 forming together with a forth conical gear wheel 403 driving a transversal rear shaft 404, a right-angled second pair of cooperating conical gears 402, 403 of the kind where the gear shafts 304, 404 meets in the same plane, e.g. a bevel gear but not a hypoid gear. The second pair of cooperating conical gears 402, 403 having a gear ratio of 1:y where y > 1, why the forth conical gear wheel 403 has the largest diameter of the two 402, 403.

The transversal rear shaft 404 has a first sprocket 405, which is connected to a second sprocket 408 via a second belt or chain 406 providing a second belt or chain transmission for driving a joint 407, whereto the wheel axis 409, 410 for the rear wheels 4 can be joined. The gear ratio, between the first sprocket 405 and the second sprocket 408 being 1:z where z > 1, why the second sprocket 408 has the largest diameter of the two 405, 408. In prior art, the longitudinal rear shaft 401 commonly extends directly to the joint 407, i.e. having one gear step less for reducing the rotational speed towards the joint 407. Thus by having an extra gear step the diameters of the large diameters gear wheels 309, 310, the second conical gear wheel 303, the forth conical gear wheel 403 can be reduced in comparison to prior art, thereby reducing the overall height of the transmission.

Whereas the invention has been shown and described in connection with the preferred embodiments thereof it will be understood that many modifications, substitutions, and additions may be made which are within the intended broad scope of the following claims. Preferably the gearbox 300 and the rear driveline 400 is arranged in one or more oil tight protective housings 600.

Of course the configuration of the drive train could be inverted, i.e. having the CVT on the first lateral side 11 and the clutch 140 on the second lateral side 12 and so on.

Further, even though the CVT transmission 200 is preferably of variable-diameter pulley type, it may also be of other kinds of CVTs.

Further, in an alternative embodiment the first balance shaft 110 and the engine drive shaft 120 are positioned rear of the engine 100, where preferably the second balance shaft 130 are positioned in front of the engine 100. Such an embodiment remains the advantage of a narrow design around the engine 100; however the advantage of a long CVT belt is lost.

According to a further embodiment, the second balance shaft 130 could be omitted; having the generator 134 mounted on e.g. the crankshaft 101 or the first balance shaft 110, in particular if the crankshaft 101 are connected via a chain or belt transmission they can be sufficiently separated to place the generator 134 on the crankshaft without interfering with the first balance shaft 110 or any components on it.

According to a yet further embodiment the first balance shaft 110 and the engine drive shaft 120 are one, where a centrifugal clutch 140 is arranged at second lateral side 12 by the driving pulley 201; i.e. no hollow balance shaft 110 having an inner engine drive shaft 120.

Further, the ATV may have only two-wheeled drive, i.e. having only a front driveline or a rear driveline.

The longitudinal rear shaft 401, the first rear bevel gear 402 and the second rear bevel gear 403 could be replaced by belt or a chain transmission, e.g. by having a sprocket mounted on the gearbox rear shaft 307 connected via a belt or chain transmission to another sprocket mounted on the transversal rear shaft 404, of course having a gear ratio of 1:y2 where y2>1. In particular if the vehicle 1 only has rear drive - the gearbox output shaft 304 and the longitudinal front shaft 501 could also be omitted using this solution. **shiftable** Following this review of the total driveline we will look closer into the gearbox 300 according to figures 4-7 and the associated controls for the driver , see figure 1. The driver sits on the saddle 7 and steers using handgrips 2a, 2b. Close to each handgrip 2a, 2b there is a first shift lever 9 and a second shift lever 8. These knobs are an important part of the operating mechanism for the gear box 300. The gear box has a first set of gears with positions for high speed, and at least one further gear from the group of gears low speed, neutral and parking, and a second set of gears with positions for at least forward and reverse. The first set of gears are shiftable under influence of the first shift lever and the positions of the second set of gears are under influence of the second shift lever separate from the first one. In a preferred embodiment the first set of gears includes positions for high speed, low speed, neutral and parking. And the second set of gears includes positions for forward and reverse. Also the second lever preferably has a stable position for each gear it influences, i.e. normally forward and reverse. If the vehicle gets stuck in the terrain it is therefore easy for the driver to rock the vehicle forwards and reverse by just moving the second shift lever between its two positions.

In the preferred embodiment the first shift lever is biased towards a normal position in which it will stay after every gear shift. This normal position is preferably when the lever points approximately vertically upwards. When moving forwards there will be an upshift and when moving backwards from the normal position there will be a downshift. This shift system is known as a sequential shift system and is common for motorcycles and racing cars. Each shift lever is movable in essentially only one plane and preferably in a longitudinal plane of the vehicle.

In an alternative embodiment the shifting system for the first shift lever could be changed so that there is a stable position for each gear it influences. This would mean four different positions for the earlier example. But it would be possible to move one of the positions from the first group of gears, preferably moving the neutral position. This would mean that each shift knob has three stable positions. The first lever would have positions for forward, neutral and reverse and the second knob for high speed, low speed and parking. This seems to be a very logic shift pattern. It must be underlined that to our knowledge there are no vehicles of this kind having two shift levers movable in essentially only one plane.

The gear box 300 as shown in figures 2-7 has three parallel shafts 301, 308 and 307. They are all located in a transverse direction of the vehicle. The main shaft 301, see figure 4, is driven by the CVT and has two fixed gear wheels 310, 311. A main shaft low gear wheel 310 cooperates with a middle shaft low gear wheel 312 on the middle shaft 308. This latter gear wheel is rotatable around the middle shaft 308 but can be locked to the shaft by moving low/high shift ring 318 towards gear wheel 312. The ring 318 is rotatably fixed but is axially movable on the shift 308. When moved axially towards gear wheel 312 its teeth 320 will engage with recesses for the teeth. The ring 318 is moved by low/high shift fork 324, which is movable on a shift shaft 323. This is a conventional technology and will therefore not be explained much more. In a similar way main shaft high gear wheel 311 is rotatably fixed to the main shaft 301. It cooperates with middle shaft high gear wheel 313 on the middle shaft 308. The shift fork 324 is arranged to be moved between a low gear position with gear wheel 310, 312 in work and a high gear position with gear wheels 311, 313 in work.

Parking shift fork 325 is also movable on the shift shaft 323. It moves a parking shift ring 321 in an axial direction to make its teeth 322 engage with a fixed part of the gear box housing. When doing this the middle shaft is locked in a parking position, so that the whole vehicle is at a parking stand still. Each shift fork 324, 325 has a control pin 326. For the parking shift fork 325 the control pin 326 engages with a parking groove 328 arranged in a parking shift sleeve 327. The part of the groove that could be seen in figure 4 is straight so that when rotating through this part of the groove the shift fork 325 will not move axially. A shift control shaft 329 holds both the parking shift sleeve 327 and a double shift sleeve 331, 332. Both shift sleeves 327, 331, 332 are rotationally fixed to the shift control shaft 329 and therefore rotate with it. The parking shift sleeve 327 is also axially fixed to the shift control shaft but the double shift sleeve 331, 332 is not. When the shift control shaft 329 is rotated counterclockwise from the shown position the shift fork 325 will not move but the shift fork 324 will first move into low gear and thereafter move into high gear, when low/high groove 328' first effects pin 326 towards low gear and later towards high gear. Needless to say low gear and high gear should not be combined with the parking position. This is ensured by a straight portion of the low/high groove 328'. The shown S-shape of groove 328' is followed by a straight portion in the middle keeping sleeve 318 in between low and high gear, i.e. keeping it in neutral. This straight section is matched by a curved section of parking shift sleeve 327 that makes the parking shift fork move axially to engage the teeth 322 of ring 321 into the parking position.

The arrangement of the parking shift sleeve with a fixed groove 328 is completely conventional. However, the arrangement of the low/high double shift sleeve 331/332 is very special because this double shift sleeve is divided into two different parts and these parts together form the low/high groove 328'. Each sleeve part 331, 332 is individually slidable in an axial direction of the shift control shaft 329 and a left side spring 330 is pushing the sleeve part 332 and a corresponding right side 330' spring is pushing the sleeve part 331 together. When shifting gear the shift control shaft 329 is rotated, e.g. counterclockwise. When doing this either shift fork 324 will move into position towards low gear or the shift sleeve 331 will move axially in the opposite direction and thereby tension a spring 330'. The tensioned spring will push the sleeve 331 into position as soon as possible, i.e. when the teeth 320 manage to get into grip with the corresponding recesses of low gear wheel 312. This is a distinct advantage because the driver can make a shifting operation complete into the new position and the spring will force the parts together as soon as possible thereafter. Thereby there is no need for the driver to keep pushing the gear shift lever and wait for engagement. He can simply push the gear shift lever all the way into the new position and leave it. The teeth 320, 319 and corresponding teeth on the gear wheels are adapted for this work so their edges are slightly crowned and when the shifting is about to take place there is a slight ticking noise from the teeth, signaling that they are not yet in position. Further the teeth have an undercut of 3-10 degrees to make the shift ring stay in position. This is however conventional. This means that the two shift sleeves 331, 332 sometimes will move apart and there is a stop fork 333 that prevents the two rings from going too far away. The stop fork has protrusions on the outer side of each ring to stop them from expanding too much. Further the stop fork is slidable on a stop fork shaft 334. Thereby its action can take place in all positions of the two shift sleeves 331, 332. Using a double shift sleeve 331, 332 is a preferred embodiment. Both parts 331, 332 can be made identical and be manufactured in a specially cost effective way as half of the groove 328' is made up by part 331 and half by part 332. Further there is another double shift sleeve 350, 351 that also use the same identical part, i.e. four identical parts 331, 332, 350, 351. Springs 330, 330', 352, 353 can also be identical. However it would be possible to make each double shift sleeve 331, 332 ; 350,351 as one unit surrounded by springs 330, 330'; 352,353 on both sides. In this embodiment the stop forks 333, 356 would not be necessary.

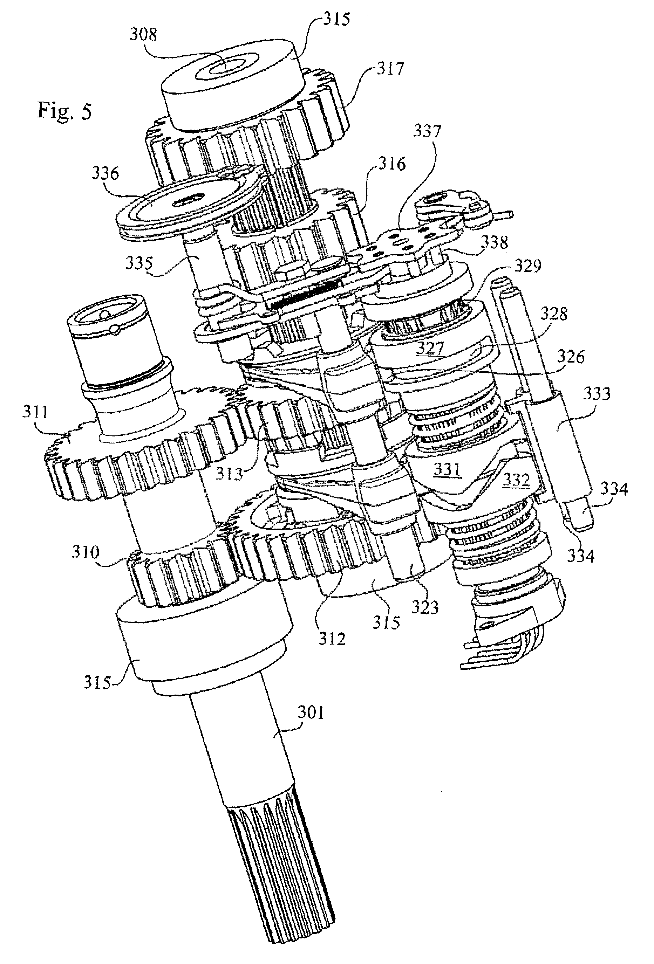

This means that rotation of the shift control shaft 329 influences four different gear positions; high gear, low gear, neutral and parking. The rotation of the shift control shaft 329 is influenced by star 337 having shafts 338. When the driver moves the shift knob two wires on a shift pulley will rotate a first wire pulley 336 on a first pulley shaft 335. This will make a shifting mechanism move the star 337 and thereby the shift control shaft 329. Pushing the shift knob forwards will give an upshift of one step and pulling it backwards will give a downshift of one step. This is however a fully conventional arrangement of a sequential gear shift for a motorcycle and will not be described further. In figure 5 the same parts can be seen in a perspective view to help understand the design.

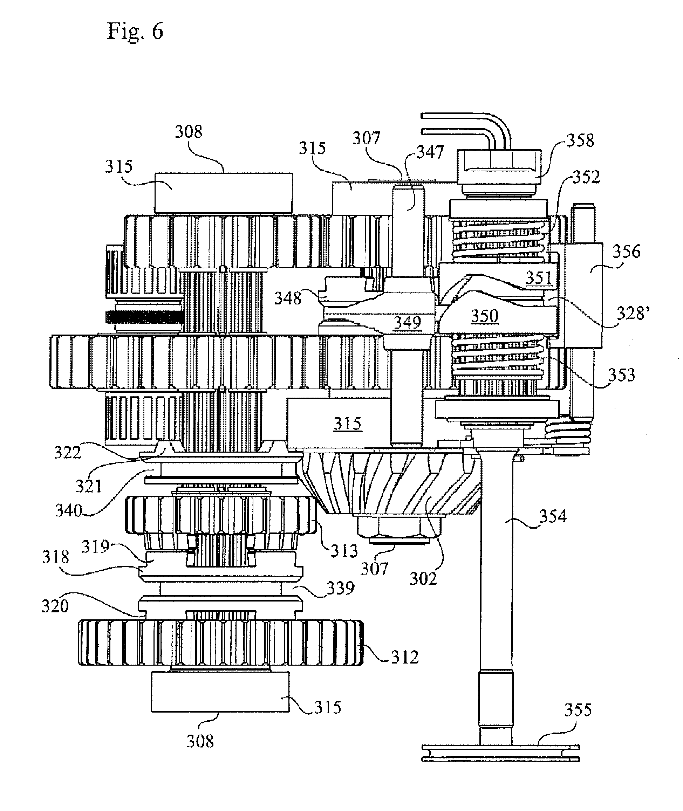

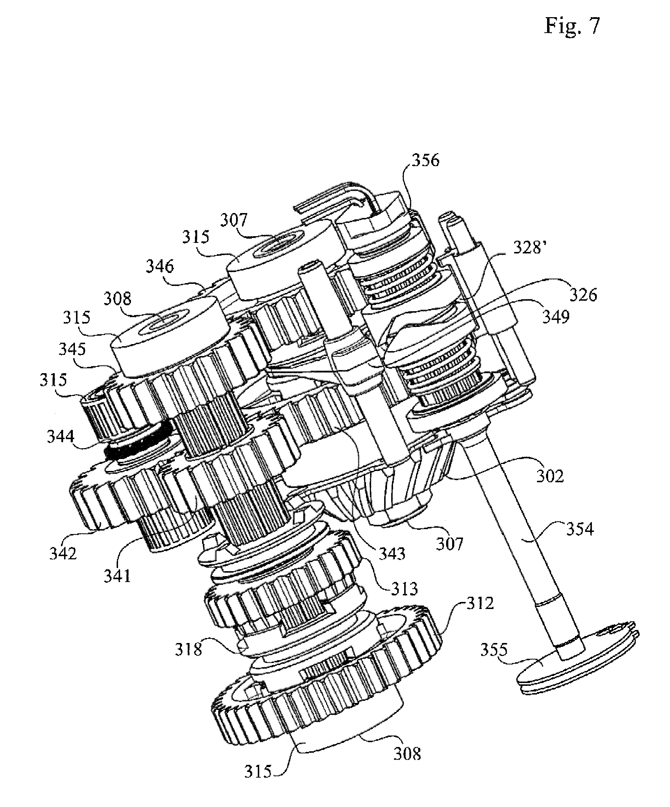

In figure 6 and 7 we can see the middle shaft 308 and a rear shaft 307. The middle shaft 308 is driven as previously described. It has a middle shaft forward gear wheel 345 rotationally fixed to it. This gear wheel drives a rear shaft forward gear wheel 346 that is rotationally free on the rear shaft 307. A forward/reverse shift ring 348 is rotationally fixed on the rear shaft 307. However it can be pushed in the axial direction by a forward/reverse shift fork 349 on a shift shaft 347. When this shift ring is pushed in grip with gear wheel 346 the forward gear is in operation. The middle shaft 308 also has a middle shaft reverse gear wheel 341 driving a reverse shaft gear wheel 342 driving, and reversing, final shaft reverse gear wheel 343. The two forward/reverse shift sleeves 351, 350 move the shift ring via shift fork 349 into forward or reverse gear. This is controlled by the driver moving the forward/reverse shift lever, which makes a second wire pulley 355 rotate a second shift control shaft 354. The work of the shift sleeves 351 and 350 and stop fork 356 and springs 352, 353 is exactly as previously described for the shift control shaft 329 and will thereby not be described again.

## Claims

1. Gear shift arrangement according to any of the previous claims, wherein the shifting of the driver is transferred into turning of at least one shift control shaft (329, 354) that has a number of rotationally fixed shift sleeves (327, 331/332, 350, 351) each sleeve comprising at least a part of a shift groove (328, 328') that affects a control pin (326) of a shift fork (324, 325, 349) to make the shift fork move and axially move a shift ring (318, 321, 348) that is rotationally fixed on a shaft (307, 308) of the gearbox and thereby make teeth of the shift ring engage/disengage with/from teeth of a gear wheel (312, 313; 343, 346)_thereby engaging/disengaging a gear of the vehicle, and at least one shift sleeve ( 331/332; 350/351) is axially movable on its shift control shaft (329; 354) in two directions compressing either a left side spring (330, 353) or a right side spring (330', 352) located on each side of the shift sleeve.

2. Gear shift arrangement according to claim 1, wherein at least one of the double shift sleeves (331/332; 350/351) is made up by two separate sleeve parts (331, 332; 350, 351) that each (331; 350) can move axially on its shift control shaft (329; 354) separate from the other part (332; 351).

3. Gear shift arrangement according to claim 2, wherein at least two neighboring sleeve parts (331, 332; 350, 351) are provided with a stop arrangement (333; 356) stopping them from mowing apart from each other more than a limited distance.

4. Gear shift arrangement according to claim 3, wherein the stop arrangement is a stop fork (333; 356) that has protrusions on the outer side of each shift sleeve part (331, 332; 350,351) and which fork is axially movable in parallel with the shift control shaft.

5. Gear shift arrangement according to claim 1, wherein at least one of the double shift sleeves (331/332; 351,352) is arranged as a one piece unit.

6. Gear shift arrangement according to any of the previous claims, wherein the shiftable gearbox is driven by an internal combustion engine.

7. Gear shift arrangement according to claim 6, wherein the engine drives a centrifugal clutch (140) that drives the shiftable gearbox.

8. Gear shift arrangement according to claim 6 or 7, wherein the internal combustion engine drives the shiftable gearbox (300) through a belt or chain transmission.

9. Gear shift arrangement according to claim 8, wherein the belt or chain transmission is a continuosly variable transmission (CVT).

10. Gear shift arrangement according to any of the previous claims, wherein the vehicle is an off road vehicle having four wheels.
